# EUROPÄISCHE PATENTSCHRIFT

(11) **EP 0 837 332 B1**
(45) Veröffentlichungstag und Bekanntmachung des Hinweises auf die Patenterteilung: **19.03.2003**
(21) Anmeldenummer: 97117367.9
(22) Anmeldetag: 08.10.1997
(51) Int. Cl.: G01P 21/02, G01M 17/007

(54) **Vorrichtung zur Ermittlung der Gerätekonstanten bei einem in einem Fahrzeug verbauten Kontrollgerät**
Device determining the constant of a control device built into a vehicle
Dispositif pour la détermination de la constante d'un appareil dans un dispositif de contrôle intégré dans un véhicule

(30) Priorität: 18.10.1996 DE 19643045
(43) Veröffentlichungstag der Anmeldung: 22.04.1998
(73) Patentinhaber: SIEMENS AKTIENGESELLSCHAFT, 80333 München (DE)
(72) Erfinder: Haas, Dieter, 78052 Villingen-Schwenningen (DE)

(56) Entgegenhaltungen:
- DE-A- 4 217 675
- FR-A- 2 650 886

## Beschreibung

Die Erfindung betrifft eine Vorrichtung zur Ermittlung der Gerätekonstanten bei einem in einem Fahrzeug verbauten Kontrollgerät nach dem Oberbegriff des ersten Anspruchs.

Aufgrund nationaler Gesetzesvorschriften und auch aufgrund von Regelungen in der Europäischen Gemeinschaft sind Fahrzeuge ab einem bestimmten zulässigen Gesamtgewicht mit einem Kontrollgerät auszustatten, das die Lenkzeit des Fahrers, die Uhrzeit, die Fahrzeuggeschwindigkeit und die vom Fahrzeug zurückgelegte Wegstrecke registriert. Ein solches Kontrollgerät kann ein Fahrtschreiber sein. Zur Erfassung der Fahrzeugbewegung wird an das Kontrollgerät ein Impulsgeber angeschlossen, der im Fahrzeug an geeigneter Stelle - vorzugsweise in dessen Getriebe - verbaut ist und bei dem die Abtastung der Rotation eines Getriebezahnrades ein Impulssignal generiert, das der vom Fahrzeug zurückgelegten Wegstrecke proportional ist.

Das Kontrollgerät ordnet eine bestimmte Anzahl Impulse einer bestimmten Wegstrecke zu. Die Proportionalitätskonstante zwischen Impulszahl und Wegstrecke ist die sogenannte Gerätekonstante des Kontrollgerätes. Die Gerätekonstante wird bei der Fertigung des Kontrollgerätes werksseitig voreingestellt und muß bei der Erstinstallation des Kontrollgerätes in ein Fahrzeug an die tatsächlichen Gegebenheiten des Fahrzeugs angepaßt sowie später von Zeit zu Zeit überprüft werden. Dabei nimmt der Radumfang wesentlichen Einfluß auf den im Kontrollgerät einzustellenden Wert der Gerätekonstanten.

Die einzustellende Gerätekonstante wird häufig in der Werkstatt auf einem Rollenprüfstand ermittelt. Rollenprüfstände als solche und die bei der Durchführung des Meßverfahrens eingesetzten Prüfmittel sind an sich aus der Praxis bekannt. Auch beschreibt das Dokument DE 42 17675A1 einen Meßrechner, an den ein Rollengeber und eine Lichtschranke angeschlossen sind. Mit dem Rollengeber wird die Umdrehungszahl der Rolle des Rollenprüfstandes erfaßt. Aus der Rollendrehzahl errechnet der Meßrechner ein Wegstreckensignal. Die Lichtschranke erfaßt die Umdrehungszahl eines vom Rollenprüfstand angetriebenen Fahrzeugrades. Der Meßrechner ermittelt daraus ein Radumfangssignal. Das im Fahrzeug installierte Kontrollgerät kann über zwischengeschaltete Elektronik mittels eines Datenkabels an den Meßrechner angeschlossen. Das bedeutet, daß zumeist sehr lange elektrische Leitungen lose durch die Werkstatt zu verlegen sind, was unfallträchtig und nicht besonders komfortabel ist.

Aus dem Dokument FR 2 650 886 A ist des weiteren bekannt, Daten von einem Mikrocontroller in einem Fahrzeug radioelektrisch, d. h. drahtlos an einen außerhalb des Fahrzeugs befindlichen zentralen Computer zu übertragen. Dieses Dokument befaßt sich jedoch mit einer Problemstellung in Verbindung mit einem Ortungssystem und keinesfalls mit einer Prüfeinrichtung in einer Werkstatt.

Es ist die Aufgabe der vorliegenden Erfindung, die Arbeitssicherheit und den Komfort bei der Handhabung einer Vorrichtung zur Ermittlung der Gerätekonstanten bei einem in einem Fahrzeug verbauten Kontrollgerät zu verbessern.

Die Aufgabe wird durch eine Vorrichtung mit den Merkmalen des ersten Anspruchs gelöst. Die abhängigen Ansprüche zeigen vorteilhafte Ausgestaltungen der gefundenen Lösung.

Die gefundene Lösung hat den Vorteil, daß die Verlegung loser Leitungen zwischen dem Fahrzeug und dem in der Werkstatt vorgesehenen Meßrechner entfällt, wodurch die Arbeitssicherheit für das Werkstattpersonal erhöht wird. Zur Durchführung des Meßverfahrens wird ein mobiles Funkterminal ins Fahrzeug mit hineingenommen. Zur Übertragung der vom Kontrollgerät über dessen Impulsgeber erfaßten Wegimpulse an das Funkterminal wird zwischen beiden Geräten eine Datenverbindung hergestellt. Das kann durch elektrische Leitungen oder drahtlos zB über eine Infrarotübertragungsstrecke erfolgen. In jedem Fall ist dazu nur eine relativ kurze Verbindung innerhalb der Fahrzeugkabine erforderlich, die für das Personal zu keiner Beeinträchtigung der Bewegungsfreiheit im Fahrzeug führt.

Das Funkterminal steht mit dem Meßrechner in bidirektionaler Funkverbindung. So können Daten des Meßrechners zum Funkterminal und auch Daten sowie Steueranweisungen vom Funkterminal an den Meßrechner übertragen werden. Zu den Steueranweisungen gehört beispielsweise das Ein- und Ausschalten des Antriebs der Rollen des Prüfstandes sowie das Heben und Senken von dessen Hubbalken. Auch die im Meßrechner ablaufenden Prüfprogramme sind vom Funkterminal aus bedienbar. Damit kann das gesamte Meßverfahren vom Funkterminal aus, dh von der Fahrzeugkabine aus gesteuert werden. Dies erhöht den Bedienungskomfort.

Zur Ermittlung der Gerätekonstanten bei einem in einem Fahrzeug verbauten Kontrollgerät ist es unabdingbar, daß die vom Kontrollgerät gelieferten Wegimpulse in Echtzeit an den Meßrechner übertragen werden, damit dort ein Abgleich mit dem vom Rollenprüfstand erfaßten Wegstreckensignal und Radumfangssignal erfolgen kann. Denn aus dem Wegstreckensignal und dem Radumfangssignal ermittelt der Meßrechner ebenfalls eine Wegimpulszahl, die mit den zeitgleich vom Kontrollgerät gelieferten Wegimpulsen zu vergleichen ist. Wenn beide Zahlenwerte von einander abweichen, muß die Gerätekonstante des Kontrollgerätes solange verändert werden, bis zwischen beiden Wegimpulszahlen Gleichheit besteht.

Es ist von Vorteil, wenn das Funkterminal aus dem Bordnetz des Fahrzeugs oder aus Akkus energieversorgt wird, weil dann während des Meßvorgangs keine Versorgungsleitungen aus der Fahrzeugkabine herausgeführt werden müssen. Die Energieversorgung kann im Fahrzeug durch eine Leitungsverbindung zu dessen Zigarettenanzünder erfolgen.

Das Funkterminal ist ein mit Rechnerintelligenz, mit Anzeigemitteln, mit Bedienelementen sowie mit diversen Schnittstellen ausgestattetes Gerät, das zur Kommunikation mit anderen Geräten über einen Funkempfänger und einen Funksender verfügt. Wenn das Funkterminal als ein um eine Funkempfangs- und Sendeeinheit erweiterter, handelsüblicher Kleinrechner, zB als ein Laptop oder Notebook ausgebildet ist, können vom Meßrechner ermittelte Meßwerte sowie eine geeignete Bedienerführung für die Prüfprogramme am Display dieses Funkterminals zur Anzeige gebracht werden. Steueranweisungen sind dann durch die Tastatur des Kleinrechners auslösbar.

Je nach der Plazierung des Meßrechners in der Werkstatt mag es vorteilhaft sein, daß der Meßrechner über eine gerätemäßig von ihm getrennte Funkempfangs- und Sendeeinheit verfügt und mit dieser über eine bidirektionale serielle Datenleitung verbunden ist. Die im Vergleich zum Meßrechner klein bauende Funkempfangs- und Sendeeinheit kann in der Werkstatt so angeordnet werden, daß aus der Fahrzeugkabine heraus eine störungsfreie Funkübertragung zum Meßrechner hin gewährleistet ist.

Ebenfalls ist es von Vorteil, wenn das Funkterminal über eine Funkuhr verfügt, weil dann in Verbindung mit den bereits genannten Mitteln im Funkterminal alles zur Verfügung steht, was für eine Prüfung des Kontrollgerätes erforderlich ist.

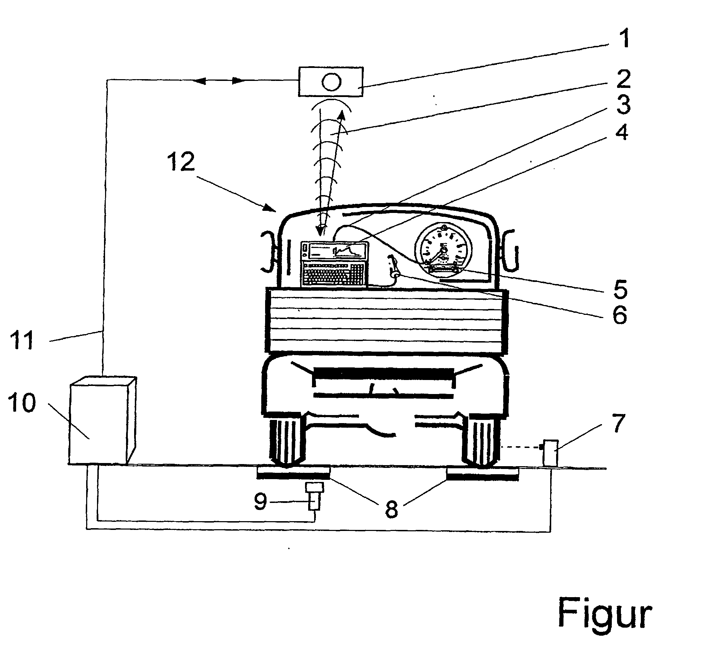

Anhand einer **Figur** soll die vorgeschlagene Vorrichtung noch kurz erläutert werden. Die Figur bedient sich dabei einer schematisch vereinfachten Darstellung, die sich auf die erfindungswesentlichen Komponenten beschränkt.

In einem Fahrzeug 12 ist ein Kontrollgerät 5 verbaut. Bei einer Fahrzeugbewegung registriert dieses Kontrollgerät mittels eines an ihm angeschlossenen Impulsgebers, der hier nicht dargestellt ist, die Fahrzeuggeschwindigkeit sowie die vom Fahrzeug zurückgelegte Wegstrecke. Zur Ermittlung der Gerätekonstanten des Kontrollgeräts befindet sich das Fahrzeug 12 auf einem Rollenprüfstand 8. Mit einer Lichtschranke 7 wird die Umdrehungszahl eines vom Rollenprüfstand 8 angetriebenen Fahrzeugrades erfaßt. Ein Rollengeber 9 erfaßt die Umdrehungszahl der treibenden Rolle des Rollenprüfstandes. Die Ausgangssignale von Rollengeber 9 und Lichtschranke 7 werden einem Meßrechner 10 zur weiteren Verarbeitung zugeführt. Je nach Anordnung des Meßrechners 10 in der Werkstatt kann es sinnvoll sein, eine vom Meßrechner 10 gerätemäßig getrennte Funkempfangs- und Sendeeinheit 1 vorzusehen, die über eine bidirektionale serielle Datenleitung 11 mit dem Meßrechner 10 verbunden ist und deren Anordnung in der Werkstatt eine störungsfreie Funkübertragung zur Fahrzeugkabine gewährleistet. Zur Durchführung des Prüfverfahrens nimmt das Werkstattpersonal ein mobiles Funkterminal 4 mit in die Fahrzeugkabine und stellt zwischen dem Kontrollgerät 5 und dem Funkterminal 4 eine Datenverbindung 3 her, die aus einem elektrischen Prüfkabel bestehen kann. Sofern das Funkterminal 4 nicht über eine autarke Stromversorgung verfügt, ist es vorteilhaft, es aus dem Bordnetz des Fahrzeugs 12 mit elektrischer Energie zu versorgen. Dazu kann eine elektrische Verbindung zB zum Zigarettenanzünder 6 hergestellt werden. Vom Kontrollgerät 5 an das Funkterminal 4 abgegebene Meßsignale werden im laufenden Prüfvorgang in Echtzeit über die Funkstrecke 2 an die Funkempfangs- und Sendeeinheit 1 und von dort an den Meßrechner 10 übertragen. Der besondere Vorteil dieses Meßaufbaus besteht darin, daß in der Werkstatt zwischen dem Fahrzeug 12 und dem Meßrechner 10 keine losen Kabel verlegt werden müssen.

## Patentansprüche

1. Vorrichtung zur Ermittlung der Gerätekonstanten bei einem in einem Fahrzeug verbauten Kontrollgerät,
a) wobei an das Kontrollgerät (5) ein im Fahrzeug angeordneter Impulsgeber zur Erfassung der vom Fahrzeug zurückgelegten Wegstrecke angeschlossen ist,
b) wobei die Ermittlung der im Kontrollgerät (5) aufgrund der Fahrzeugbeschaffenheit einzustellenden Gerätekonstanten auf einem Rollenprüfstand (8) durchgeführt wird,
c) wobei der Rollenprüfstand (8) durch Erfassung der Rollendrehzahl ein Wegstreckensignal und durch Erfassung der Umdrehungszahl eines vom Rollenprüfstand angetriebenen Fahrzeugrades ein Radumfangssignal an einen Meßrechner (10) liefert,
**dadurch gekennzeichnet,**
d) daß im Fahrzeug ein mobiles Funkterminal (4) angeordnet ist,
e) daß das Funkterminal (4) ein mit Rechnerintelligenz, mit Anzeigemitteln, mit Bedienelementen sowie mit diversen Schnittstellen ausgestattetes Gerät ist,
f) daß das Funkterminal (4) über eine Datenverbindung (3) mit dem Kontrollgerät (5) verbunden ist,
g)daß das Kontrollgerät (5) die vom Impulsgeber erfaßten Wegimpulse an das Funkterminal (4) überträgt,
h) daß das Funkterminal (4) mit dem Meßrechner (10) in bidirektionaler Funkverbindung (2) steht,
i)daß der Meßrechner (10) über eine Funkempfangs- und Sendeeinheit (1) verfügt,
j) daß mit dem Funkterminal (4) Steueranweisungen auslösbar sind, um das Betriebsverhalten des Meßrechners (10) vom Funkterminal (4) aus zu steuern und
k) daß das Funkterminal (4) die Wegimpulse in Echtzeit an den Meßrechner (10) zum Abgleich mit dem vom Rollenprüfstand (8) erfaßten Wegstreckensignal und Radumfangssignal überträgt.

2. Vorrichtung nach Anspruch 1, **dadurch gekennzeichnet, daß** die Datenverbindung (3) eine Infrarotübertragungsstrecke ist.

3. Vorrichtung nach Anspruch 1 oder 2, **dadurch gekennzeichnet, daß** das Funkterminal (4) aus dem Bordnetz des Fahrzeugs energieversorgt wird.

4. Vorrichtung nach einem der vorangegangenen Ansprüche, **dadurch gekennzeichnet, daß** das Funkterminal (4) ein um eine Funkempfangs- und Sendeeinheit erweiterter, handelsüblicher Kleinrechner, Laptop oder Notebook, ist.

5. Vorrichtung nach einem der vorangegangenen Ansprüche, **dadurch gekennzeichnet, daß** der Meßrechner (10) über eine gerätemäßig von ihm getrennte Funkempfangs- und Sendeeinheit (1) verfügt und mit dieser über eine bidirektionale serielle Datenleitung (11) verbunden ist.

6. Vorrichtung nach einem der vorangegangenen Ansprüche, **dadurch gekennzeichnet, daß** das Funkterminal (4) über eine Funkuhr verfügt.

## Claims

1. Apparatus for determining the device constant for a monitoring device which is installed in a vehicle,
a) a pulse transmitter which is arranged in the vehicle being connected to the monitoring device (5) in order to sense the distance travelled by the vehicle,
b) the device constant which is to be set in the monitoring device (5) owing to the. quality of the vehicle being determined on a roller test bench (8),
c) the roller test bench (8) supplying a measurement computer (10) with a distance-travelled signal by sensing the rotational speed of the rollers, and with a wheel circumferential signal by sensing the rotational speed of a vehicle wheel driven by the roller test bench,
characterized
d) in that a mobile radio terminal (4) is arranged in the vehicle,
e) in that the radio terminal (4) is a device which is equipped with computer intelligence, with display means, with operator controls and with various interfaces,
f) in that the radio terminal (4) is connected to the monitoring device (5) via a data link (3),
g) in that the monitoring device (5) transmits the travel pulses sensed by the pulse transmitter to the radio terminal (4),
h) in that the radio terminal (4) is connected to the measurement computer (10) with a bidirectional radio link (2),
i) in that the measurement computer (10) has a radio transceiver (1),
j) in that control instructions can be triggered using the radio terminal (4) in order to control the operating behaviour of the measurement computer (10) from the radio terminal (4), and
k) in that the radio terminal (4) transmits the travel pulses in real time to the measurement computer (10) for reconciliation with the distance-travelled signal sensed by the roller test bench (8) and the wheel circumferential signal.

2. Apparatus according to Claim 1, **characterized in that** the data link (3) is an infrared transmission link.

3. Apparatus according to Claim 1 or 2, **characterized in that** the radio terminal (4) is supplied with power from the vehicle's electrical system.

4. Apparatus according to one of the preceding claims, **characterized in that** the radio terminal (4) is a commercially available small computer, laptop or notebook, which is expanded with a radio transceiver.

5. Apparatus according to one of the preceding claims, **characterized in that** the measurement computer (10) has a radio transceiver (1) which is separated from it in terms of equipment, and said measurement computer (10) is connected to said radio transceiver (1) via a bidirectional serial data line (11).

6. Apparatus according to one of the preceding claims, **characterized in that** the radio terminal (4) has a radio clock.

## Revendications

1. Dispositif pour déterminer les constantes d'appareil dans le cas d'un appareil de contrôle installé dans un véhicule automobile,
a) un générateur d'impulsions, disposé dans le véhicule automobile, étant associé à l'appareil de contrôle (5), pour détecter la distance parcourue par le véhicule automobile,
b) la détermination des constantes d'appareil à régler dans l'appareil de contrôle (5) en raison de la structure du véhicule automobile étant exécutée sur un banc d'essai à rouleaux (8),
c) le banc d'essai à rouleaux (8) fournissant à un ordinateur de mesure (10) un signal de distance parcourue par détermination du nombre de rotations de rouleaux et un signal correspondant à la circonférence de roue par détermination du nombre de rotations d'une roue de véhicule entraînée par le banc d'essai à rouleaux,
ce dispositif étant **caractérisé en ce qu'**
d) un terminal radio (4) mobile est disposé dans le véhicule automobile,
e) le terminal radio (4) est un appareil conçu avec une intelligence d'ordinateur, avec des moyens d'affichage, avec des organes de commande, ainsi qu'avec divers interfaces,
f) le terminal radio (4) est relié à l'appareil de contrôle (5) par une liaison de données (3),
g) l'appareil de contrôle (5) transmet au terminal radio (4) les impulsions concernant la distance parcourue détectée par le générateur d'impulsions,
h) le terminal radio (4) est relié par une liaison radio bidirectionnelle (2) à l'ordinateur de mesure (10),
i) l'ordinateur de mesure (10) dispose d'une unité radio de réception et d'émission (1),
j) des instructions de commande peuvent être émises avec le terminal radio (4) pour commander le fonctionnement de l'ordinateur de mesure (10) depuis le terminal radio (4), et
k) le terminal radio (4) transmet les impulsions correspondant à la distance parcourue, en temps réel, à l'ordinateur de mesure (10) pour effectuer un ajustement sur le signal de distance parcourue et le signal de circonférence de roue détectés par le banc d'essai à rouleaux (8).

2. Dispositif suivant la revendication 1, **caractérisé en ce que** la liaison de données (3) est un trajet de transmission infrarouge.

3. Dispositif suivant la revendication 1 ou 2, **caractérisé en ce que** le terminal radio (4) est alimenté en énergie à partir du réseau de bord du véhicule automobile.

4. Dispositif suivant l'une des revendications précédentes, **caractérisé en ce que** le terminal radio (4) est un micro-ordinateur du commerce, "laptop" ou carnet de notes", complété par une unité de réception et d'émission radio.

5. Dispositif suivant l'une des revendications précédentes, **caractérisé en ce que** l'ordinateur de mesure (10) dispose, en tant qu'appareil, d'une unité de réception et d'émission radio (1) séparée de lui, et est relié à celle-ci par un conducteur de données (11) bidirectionnel série.

6. Dispositif suivant l'une des revendications précédentes, **caractérisé en ce que** le terminal radio (4) dispose d'une horloge radio.
